# EUROPÄISCHE PATENTSCHRIFT

(11) **EP 2 533 907 B1**
(45) Veröffentlichungstag und Bekanntmachung des Hinweises auf die Patenterteilung: **16.09.2015**
(21) Anmeldenummer: 11703385.2
(22) Anmeldetag: 29.01.2011
(51) Int. Cl.: B05B 15/12, B03C 3/53, B03C 3/08, B03C 3/16, B03C 3/78, B03C 3/47

(54) **ANLAGE ZUM BESCHICHTEN, INSBESONDERE LACKIEREN, VON GEGENSTÄNDEN, INSBESONDERE VON FAHRZEUGKAROSSERIEN**
SYSTEM FOR COATING, IN PARTICULAR PAINTING, OBJECTS, IN PARTICULAR VEHICLE BODIES
INSTALLATION DE REVÊTEMENT, EN PARTICULIER DE LAQUAGE, D'OBJETS, EN PARTICULIER DE CARROSSERIES DE VÉHICULE

(30) Priorität: 09.02.2010 DE 102010007479
(43) Veröffentlichungstag der Anmeldung: 19.12.2012
(73) Patentinhaber: Eisenmann AG, 71032 Böblingen (DE)
(72) Erfinder: LINK, Kersten, 71120 Grafenau (DE); SCHUSTER, Werner, 89561 Dischingen (DE)
(74) Vertreter: Ostertag, Ulrich
(86) Internationale Anmeldenummer: PCT/EP2011/000414
(87) Internationale Veröffentlichungsnummer: WO 2011/098222

(56) Entgegenhaltungen:
- EP-A1- 2 011 575
- DE-C1- 4 018 488
- US-A- 5 264 014
- US-A1- 2008 216 659

## Beschreibung

Die Erfindung betrifft eine Anlage zum Beschichten von Gegenständen nach dem Oberbegriff des Patentanpruchs 1.

Bei der manuellen oder automatischen Applikation von Lacken auf Gegenständen gelangt ein Teilstrom des Lackes, der im Allgemeinen sowohl Festkörper als auch Lösemittel und/oder Bindemittel enthält, nicht auf den Gegenstand. Dieser Teilstrom wird in der Fachwelt "Overspray" genannt. Der Overspray wird von dem Luftstrom in der Beschichtungskabine erfasst und einer Abscheidung zugeführt, so dass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen bevorzugt Nassabscheidesysteme zum Einsatz. Bei vom Markt her bekannten Nassabscheidern fließt Wasser gemeinsam mit der von oben kommenden Kabinenabluft zu einer die Luftströmung beschleunigenden Düse. In dieser Düse findet eine Verwirbelung der durchströmenden Kabinenabluft mit dem Wasser statt. Bei diesem Vorgang treten die Overspray-Partikel weitgehend in das Wasser über, so dass die Luft den Nassabscheider im Wesentlichen gereinigt verlässt und sich die Lackoverspray-Partikel im Wasser befinden. Aus diesem können sie dann wiedergewonnen oder entsorgt werden. Bei bekannten Nassabscheidern wird verhältnismäßig viel Energie zur Umwälzung der erforderlichen recht großen Wassermenge und zur Überwindung der Druckdifferenz zwischen Kabine, Düse und Entsorgungsraum benötigt. Die Aufbereitung des Spülwassers ist durch den hohen Einsatz an lackbindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat bzw. bei hohem Feuchte- oder Lösungsmittelgehalt das Verwerfen der Abluft erfordert.

Bei vom Markt her bekannten Vorrichtungen wird demgegenüber auf trockenem Weg abgeschieden, indem von der vorbeiströmenden Kabinenluft mitgeführte Overspray-Partikel durch die Gegenelektrodeneinrichtung der elektrostatisch arbeitenden Abscheidevorrichtung ionisiert werden und aufgrund des zwischen der Abscheideelektrode und der Gegenelektrodeneinrichtung aufgebauten elektrischen Felds zur Abscheidefläche der Abscheideelektrode wandern, an welcher sie sich abscheiden.

Bei den bekannten Anlagen werden die an der Abscheidefläche haftenden Overspray-Partikel mechanisch von dieser abgestreift und abtransportiert.

Eine Anlage der eingangs genannten Art ist aus der US 5 264 014 A bekannt geworden. Dort werden Sammelelektroden einer elektrostatisch arbeitenden Abscheidevorrichtung nicht mechanisch, sondern mittels Wasser gereinigt, welches von oben über die Sammelelektroden geleitet wird. Falls die Overspray-Partikel nicht wasserlöslich sind, bleibt allerdings die Reinigung unvollständig.

Aufgabe der vorliegenden Erfindung ist es, eine Anlage zur Beschichtung von Gegenständen derart auszubilden, dass der Betrieb der elektrostatischen Abscheidevorrichtung problemfreier ist, insbesondere die Overspray-Partikel leichter von der Abscheidefläche entfernt werden können.

Diese Aufgabe wird erfindungsgemäß durch eine Anlage mit den im Patentanspruch 1 angegebenen Merkmalen gelöst.

Wie im Stand der Technik bekannt, werden also die Overspray-Partikel an der Abscheidefläche von einer Abscheideflüssigkeit aufgenommen, mit der sie abtransportiert werden können. Die Mengen der hierfür benötigten Abscheideflüssigkeit sind verhältnismäßig gering, so dass die oben geschilderten Probleme, die bei Nassabscheidern auftreten, nicht ins Gewicht fallen. Selbstverständlich muss die Abscheideflüssigkeit auf die Overspray-Partikel abgestimmt sein; sie kann auch Zusätze enthalten, welche die nachträgliche Entfernung der Overspray-Partikel aus der Abscheideflüssigkeit erleichtern.

Erfindungsgemäß ist die Bauweise der Zuführeinrichtung für die Abscheideflüssigkeit derart, dass eine Zuführrinne vorgesehen ist, die im untersten Bereich von zwei Federblechen gebildet ist. Dies stellt eine besonders einfache Art dar, die Abscheideflächen der Abscheideelektrode mit Abscheideflüssigkeit zu versorgen. Letztere "leckt" einfach durch den nicht ganz dichten Spalt zwischen den unteren Rändern der Federbleche und den Abscheideflächen der Abscheideelektrode hindurch.

Um sicherzustellen, dass auch bei höherviskosen Abscheideflüssigkeiten ein ausreichendes, kontinuierliches und flächiges Abströmen aus der Zuführrinne erfolgt, sind die beiden Schieberbleche vorgesehen, die durch ihre reziprozierende Bewegung aktiv zum Austragen der Abscheideflüssigkeit aus der Zuführrinne beitragen. Außerdem wird ein Verstopfen des Spaltes zwischen der Abscheideelektrode und den Federblechen durch ggfs. mitgeführte Lackpartikel zuverlässig verhindert.

Bei einer bevorzugten Ausführungsform der erfindungsgemäßen Anlage sind die unteren Ränder der Federbleche zinnenartig bzw. nach Art eines groben Kammes geformt. Auch diese Bauweise trägt dazu bei, dass die Abscheideflüssigkeit im richtigen Maße und in der richtigen Verteilung aus der Zuführrinne auf die Abscheidebleche austritt. Die Geometrie der "Zinnen" bzw. der Zwischenräume zwischen den Kammzinken kann entsprechend den jeweiligen Bedürfnissen gewählt werden.

Zusätzlich ist vorzugsweise eine Einrichtung vorgesehen, mit welcher die unteren Ränder der Federbleche von der Anlage an den Abscheideflächen der Abscheideelektrode so weit weg bewegbar sind, dass der Inhalt der Zuführrinne auslaufen kann. Auf diese Weise ist eine Reinigung der Zuführrinne von Zeit zu Zeit möglich, die eine vollständige Entleerung der Zuführrinne voraussetzt.

Die erfindungsgemäße Anlage eignet sich besonders zum Lackieren von Gegenständen.

Bei den Gegenständen handelt es sich vorzugsweise um Fahrzeugkarosserien.

Ausführungsbeispiele der Erfindung werden nachstehend anhand der Zeichnung näher erläutert. Es zeigen;
- Figur 1: einen vertikalen Teilschnitt durch eine Lackieranlage zum Lackieren von Fahrzeugkarosserien;
- Figur 2: perspektivisch eine elektrostatische Abscheidevorrichtung für Lack-Overspray, die in der Lackieranlage von Figur 1 verwendet wird;
- Figur 3: perspektivisch eine erste Art einer Abscheideeinheit aus der Abscheidevorrichtung der Figur 2;
- Figuren 4 bis 6: die Stirnansicht einer Zuführeinrichtung für eine Abscheideflüssigkeit und einer zugeordneten Abscheideelektrode in unterschiedlichen Betriebspositionen;
- Figur 7: perspektivisch ein alternatives Ausführungsbeispiel einer Zuführeinrichtung für eine Abscheideflüssigkeit;
- Figuren 8 bis 10: in der Stirnansicht die Zuführeinrichtung der Figur 7, erneut in unterschiedlichen Betriebspositionen zusammen mit einer Betätigungseinrichtung.

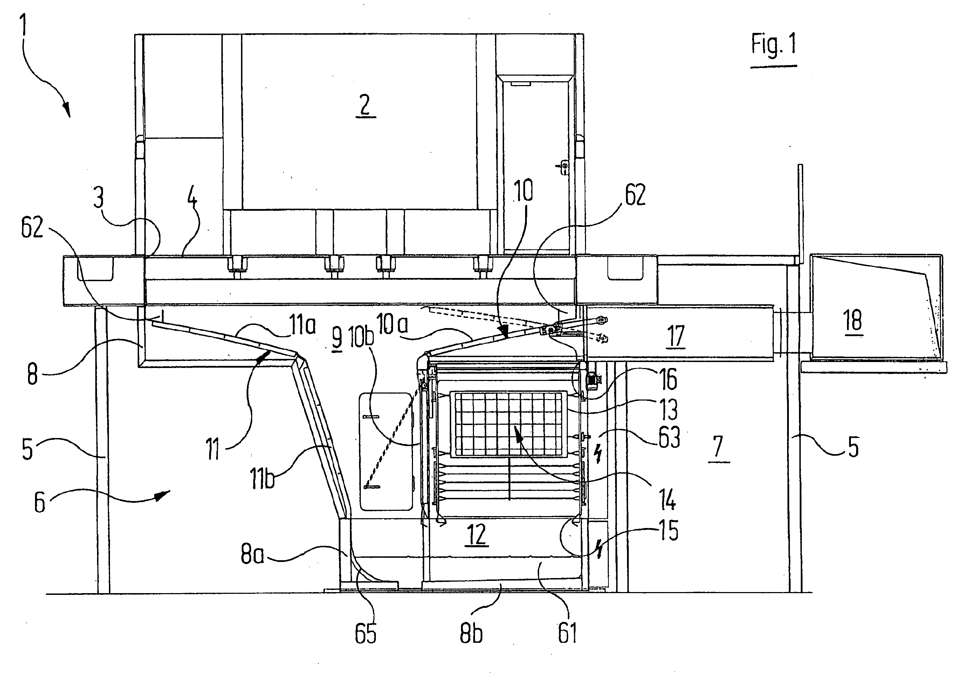

Zunächst wird auf Figur 1 Bezug genommen, in welcher eine Lackieranlage zum Lackieren von Fahrzeugkarosserien dargestellt ist. Sie trägt insgesamt das Bezugszeichen 1. In der oberen Hälfte ist teilweise eine Lackierkabine 2 gezeigt, die in bekannter Weise ausgestaltet ist und daher nachfolgend nicht näher erläutert zu werden braucht. Die zu lackierenden Fahrzeugkarosserien werden senkrecht zur Zeichenebene der Figur 1 mit Hilfe eines nicht dargestellten Transportsystems kontinuierlich oder intermittierend gefördert und dabei aus Applikationseinrichtungen, die ebenfalls nicht gezeigt sind, mit Lack beaufschlagt.

Nicht eigens dargestellt ist außerdem ein Luftplenum, welches sich oberhalb der Lackierkabine 2 befindet.

Konditionierte Luft wird in gleichmäßigem Strom aus diesem Luftplenum über eine Filterdecke in den Inneraum der Lackierkabine 2 eingebracht. Dort fließt sie nach unten, nimmt den nicht an den Fahrzeugkarosserien haftenden Lack-Overspray auf und verlässt die Lackierkabine 2 durch eine großflächige, durch einen begehbaren Gitterrost 4 abgedeckte untere Öffnung 3.

Die gesamte Lackierkabine 2 ruht auf einem Stahlbau 5, wie dies an und für sich bekannt ist.

Unterhalb der Lackierkabine 2 befindet sich ein Anlagenbereich 6, in welchem die die Lackierkabine 2 über die Öffnung 3 verlassende Overspray-Partikel-beladene Luft wieder gereinigt wird. Der Anlagenbereich 6 umfasst einen Abscheideraum 9, der bis auf die obere Öffnung 3 und weitere der Durchführung der Luft dienende Öffnungen allseits durch Wände 8 abgeschlossen ist. Innerhalb des Abscheideraumes 9 befinden sich zwei Leitbleche 10 und 11. Das in Figur 1 linke Leitblech 11 besitzt einen größeren, verhältnismäßig wenig von außen nach innen geneigten Abschnitt 11a und einen sich an diesen anschließenden stärker geneigten Abschnitt 11b. In ähnlicher Weise besitzt das Leitblech 10, welches in Figur 1 rechts gezeigt ist, einen äußeren, verhältnismäßig wenig von außen nach innen geneigten Abschnitt 10a sowie einen sich an diesen anschließenden, im dargestellten Ausführungsbeispiel senkrecht nach unten führenden Abschnitt 10b. Der Abschnitt 10a lässt sich aus der durchgezogen dargestellten Arbeitsposition in eine gestrichelt dargestellte Wartungsposition verschwenken. In ähnlicher Weise lässt sich der Abschnitt 10b aus der vertikalen Arbeitsposition in eine Wartungsposition verschwenken.

Aus seitlich angebrachten Verteilerrinnen 62 kann eine Abscheideflüssigkeit auf die Leitbleche 10 und 11 in einer mehr oder weniger zusammenhängenden Schicht an deren oberer Fläche nach unten fließen.

Unterhalb des von den beiden Leitblechen 10 und 11 auf gegenüberliegenden Seiten begrenzten Raumes befindet sich ein Übergangsraum 12. Ein Leitblech 65, welches sich gekrümmt zwischen der Wand 8a und dem Boden 8b des Übergangsraumes 12 erstreckt, sorgt für einen strömungsgünstigen Übergang der Luft in den Übergangsraum 12.

Oberhalb des in Figur 1 rechten Bereichs des Übergangsraumes 12, rechts von dem vertikal verlaufenden Abschnitt 10b des Leitblechs 10, ist ein Aufnahmeraum 13 für eine insgesamt mit dem Bezugszeichen 14 versehene elektrostatisch arbeitende Abscheidevorrichtung vorgesehen. Der Aufnahmeraum 13 steht über eine untere Öffnung 15 mit dem Übergangsraum 12 und über eine obere Öffnung 16 mit dem Raum unterhalb des Abschnitts 10a des Leitbleches 10 und von dort über einen horizontal ausgerichteten Luftkanal 17 mit einem Luft-Sammelkanal 18 in Verbindung. Letzterer führt zu einer nicht dargestellten Luft-Konditioniereinrichtung, mit welcher die gereinigte Luft wieder auf die richtige Temperatur und Luftfeuchtigkeit gebracht wird, so dass sie erneut dem Luftplenum oberhalb der Lackierkabine 2 zugeleitet werden kann. In bekannter Weise wird das Volumen der rezirkulierten Luft in Abhängigkeit von nicht entfernbaren Substanzen gewählt.

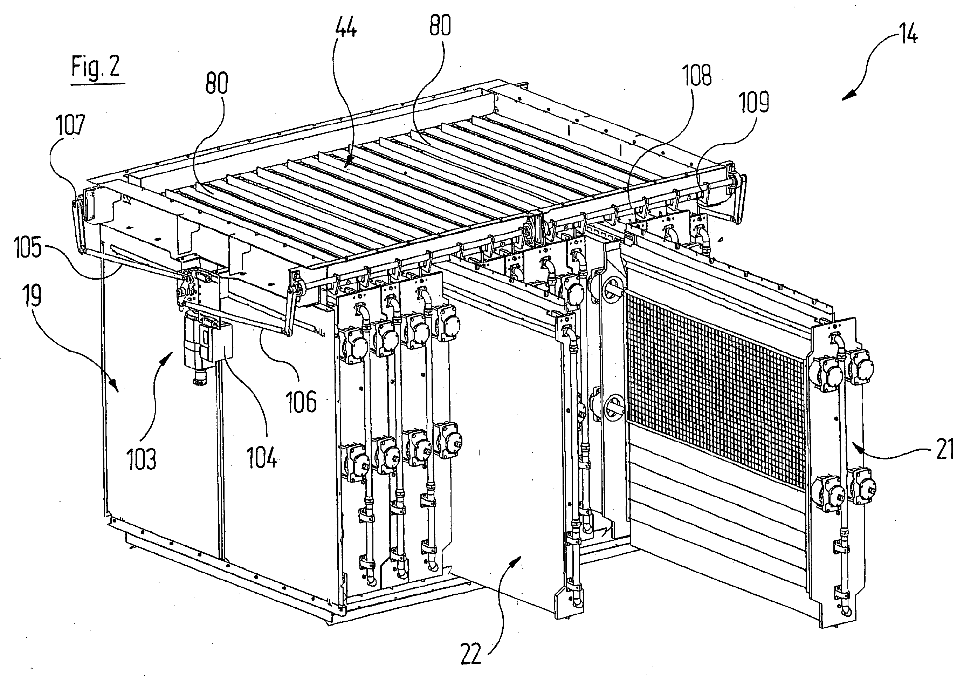

Zur Beschreibung der Abscheidevorrichtung 14 wird nunmehr auf die Figuren 2 bis 6 Bezug genommen. Wie der perspektivischen Ansicht der Abscheidevorrichtung 14 in Figur 2 entnommen werden kann, umfasst dieses ein Gehäuse 19, welches im Wesentlichen nach unten, vorne und oben offen ist. Innerhalb des Gehäuses 19 befindet sich nebeneinander eine Vielzahl von als Einschüben gestalteten Abscheideeinheiten 21 bzw. 22, die unterschiedlich breit sind.

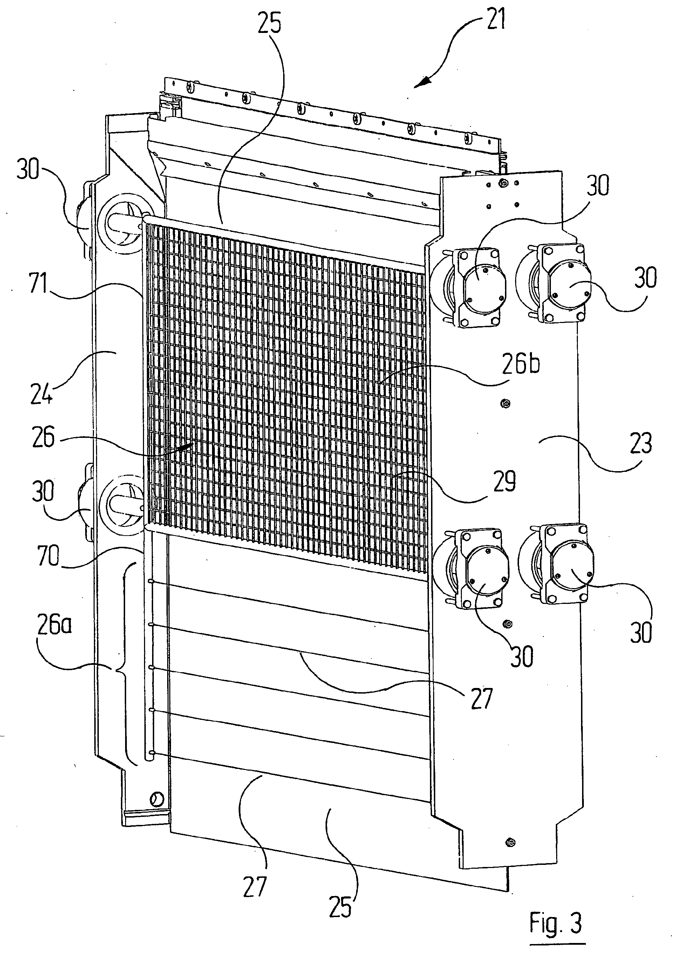

Der grundsätzliche Aufbau der breiteren Abscheideeinheiten 21 ist der Figur 3 zu entnehmen. Jede Abscheideeinheit 21 umfasst eine vordere Stirnplatte 23 und eine hintere Stirnplatte 24. Zwischen den beiden Stirnplatten 23 und 24, mittig mit diesen verbunden, erstreckt sich eine plattenförmige Abscheideelektrode 25, die im Betriebszustand vertikal ausgerichtet ist. Beidseits der,Abscheideelektrode 25 ist jeweils eine Gegenelektrodeneinrichtung 26 vorgesehen. In Figur 3 ist nur eine dieser Gegenelektrodeneinrichtungen 26 dargestellt; die zweite, identisch ausgebildete ist hinter der Abscheideelektrode 25 angeordnet und in Figur 3 von dieser verdeckt.

Die Gegenelektrodeneinrichtung 26 weist einen unteren Koronabereich 26a auf, in dem im dargestellten Ausführungsbeispiel fünf Koronadrähte 27 vorgesehen sind, die parallel zueinander und in Abstand zu der Abscheideelektrode 25 zwischen einer der vorderen Stirnplatte 23 benachbarten Haltestange (in Figur 3 verdeckt) und einer entsprechenden, der hinteren Stirnplatte 24 benachbarte Haltestange 70 verlaufen und mit diesen Haltestangen 70 elektrisch verbunden sind.

Oberhalb des Koronabereiches 26a befindet sich ein Feldbereich 26b der Gegenelektrodeneinrichtung 26. Körperlich ist dieser Feldbereich 26b durch eine gitterartige Feldelektrode 29 verwirklicht, die parallel zur Abscheideelektrode 25, in Abstand zu dieser, in einem metallischen Rahmen 71 montiert ist. Die Feldelektrode 29 ist mit dem Rahmen 71 elektrisch verbunden, der seinerseits wieder mit den Haltestangen 70 elektrisch verbunden ist, so dass also die Feldelektrode 29 und die Koronadrähte 27 im Wesentlichen auf demselben Potential liegen.

Halterungen 30 dienen der Befestigung des Rahmens 71 und damit der gesamten Gegenelektrodeneinrichtung 26 an der vorderen Stirnplatte 23 und der hinteren Stirnplatte 24. Alle Halterungen 30 sind als Isolatoren ausgebildet; zwei Halterungen 30 an der vorderen Stirnplatte 23 enthalten zusätzlich Hochspannungsanschlüsse.

Wie bereits oben erwähnt, ist die Abscheideeinheit 21 als Einschub ausgebildet; dies heißt, dass sie als Einheit aus dem Gehäuse 19 herausgezogen werden kann.

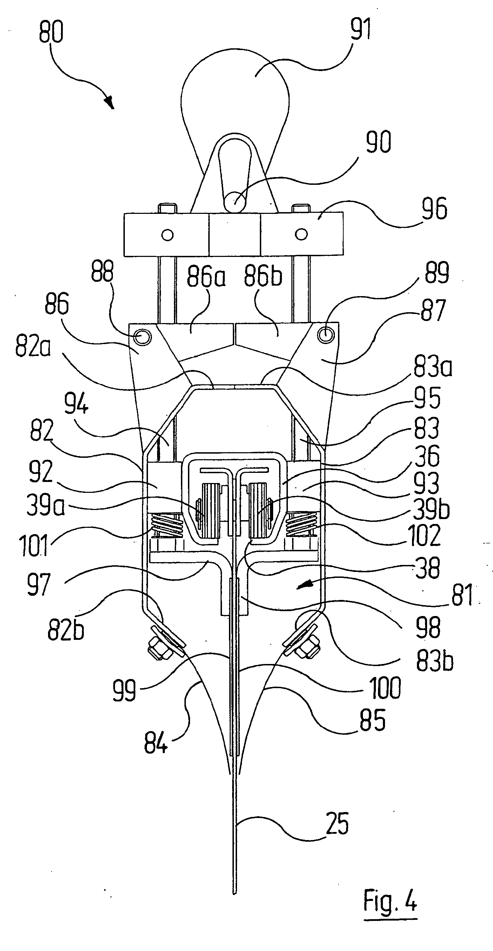

Gehalten wird jede Abscheideeinheit 21 innerhalb des Gehäuses von einem eine Schiene bildenden Hohlprofil 36, in dessen Unterseite ein durchgehender Spalt 38 gebildet ist. Dies ist insbesondere den Figuren 4 bis 6 zu entnehmen.

Die Abscheideelektrode 25 durchgreift mit ihrem oberen Endbereich den Spalt 38 in der Schiene 36. An dem nach oben über den Spalt 38 überstehenden Bereich der Abscheideelektrode 25 ist eine Vielzahl von Rollenpaaren 39a, 39b gelagert, die in den Figuren 4 bis 6 senkrecht zur Zeichenebene in Abstand zueinander angeordnet sind. Ersichtlich ist es bei dieser Konstruktion möglich, die Abscheideeinheit 21 aus dem Gehäuse 19 herauszuziehen, wobei die Rollen 39a, 39b in der Schiene 36 auf den beidseits des Spaltes 38 liegenden unteren Flanschen ablaufen. Die Abscheideelektrode 25 bewegt sich in dem Spalt 38 entsprechend, bis sie schließlich von der Schiene 36 freikommt. Die so herausgenommene Abscheideeinheit 21 kann dann bei Bedarf gewartet werden. Das Einschieben der Abscheideeinheit 21 erfolgt sinngemäß in umgekehrter Weise.

Die schmäleren Abscheideeinheiten 22 wechseln, wie der Figur 2 zu entnehmen ist, mit den breiteren Abscheideeinheiten 21 ab, wobei randständig stets die breiteren Abscheideeinheiten 21 in dem Gehäuse 19 vorgesehen sind. Die geringere Breite der Abscheideeinheiten 22 erklärt sich daraus, dass diese beidseits der Abscheideelektrode keine Gegenelektrodeneinrichtung aufweisen.

Aufgrund der alternierenden Anordnung und der beiden Arten von Abscheideeinheiten 21, 22 innerhalb der Abscheidevorrichtung 14 ist gewährleistet, dass jeweils beiden Abscheideflächen jeder Abscheideelektrode 25 eine Gegenelektrodeneinrichtung 26 zugeordnet ist. Mit Ausnahme der äußersten Gegenelektrodeneinrichtungen 26 an den randständigen breiten Abscheideeinheiten 21 arbeiten auf diese Weise alle Gegenelektrodeneinrichtungen 26 mit zwei Abscheideelektroden 25 zusammen, wovon eine einer breiteren Abscheideeinheit 21 und die andere einer schmäleren Abscheideeinheit 22 zugeordnet ist. Die genannten äußersten Gegenelektrodeneinrichtungen 26 arbeiten jeweils zusätzlich mit der Innenfläche der benachbarten Seitenwand des Gehäuses 19 zusammen, die ebenfalls als Abscheidefläche dient und potentialmäßig entsprechend geschaltet ist.

Die Oberseite des Gehäuses 19 der Abscheidevorrichtung 14 wird von einer Anordnung 44 aus Zuführeinrichtungen 80 abgedeckt mit deren Hilfe den Abscheideelektroden 25 der Abscheideeinheiten 21, 22 von oben her Abscheideflüssigkeit zugeführt werden kann.

Zur näheren Beschreibung einer dieser Zuführungen 80 wird nunmehr erneut auf die Figuren 4 bis 6 Bezug genommen.

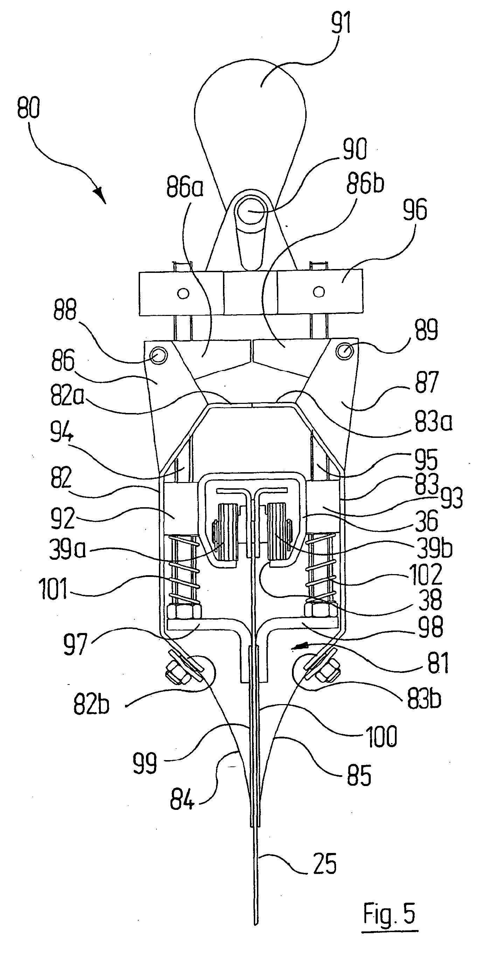

Hauptbestandteil der Zuführeinrichtung 80 ist eine Zuführrinne 81, welche die Führungsschiene 36 und den oberen Bereich der Abscheideelektrode 25 umgibt und sich ebenso wie diese von der vorderen Stirnplatte 23 bis zur hinteren Stirnplatte 24 erstreckt. Die Zuführrinne 81 umfasst zwei gewinkelte symmetrische Profile 82, 83 deren obere, waagerecht verlaufende Schenkel 82a, 83e im Normalzustand mit ihren Rändern aneinanderstoßen, wie dies in den Figuren 4 und 5 gezeigt ist. Die unteren Schenkel 82a, 83b der beiden Profile 82, 83 konvergieren nach unten aufeinander zu, halten aber mit ihren Rändern voneinander Abstand. An diesen unteren Schenkeln 82b, 83b sind zwei Federbleche 84, 85 angeschraubt, die mit ihren unteren Rändern während des Normalbetriebes an gegenüberliegenden Seiten der Abscheideelektrode 25 federnd anliegen. Dies ist die in Figur 4 dargestellte Situation, in der jedoch aus Darstellungsgründen zwischen den unteren Rändern der Federbleche 84, 85 und den benachbarten Flächen der Abscheideelektrode 25 ein kleiner Abstand gezeigt ist.

Die von den Profilen 82, 83 und den Federblechen 84, 85 begrenzte Zuführrinne 81 ist an einer geeigneten Stelle, die in der Zeichnung nicht erkennbar ist, mit einer Quelle einer Abscheideflüssigkeit verbunden.

Die beiden Profile sind jeweils in ihren den Stirnplatten 23, 24 benachbarten Endbereichen mit Hilfe zweier Winkel 86, 87 gehalten, deren obere, im Wesentlichen horizontale Schenkel 86a, 86b sich in Richtung auf die Mittelebene der Zuführeinrichtung 80 erstrecken. Ihre Oberseiten stellen, wie weiter unten noch deutlich wird, Betätigungsflächen dar. Die Winkel 86, 87 sind um Achsen 88, 89 verschwenkbar, die sich zwischen der vorderen Stirnplatte 23 und der hinteren Stirnplatte 24 erstrecken und an diesen Stirnplatten 23, 24 befestigt sind.

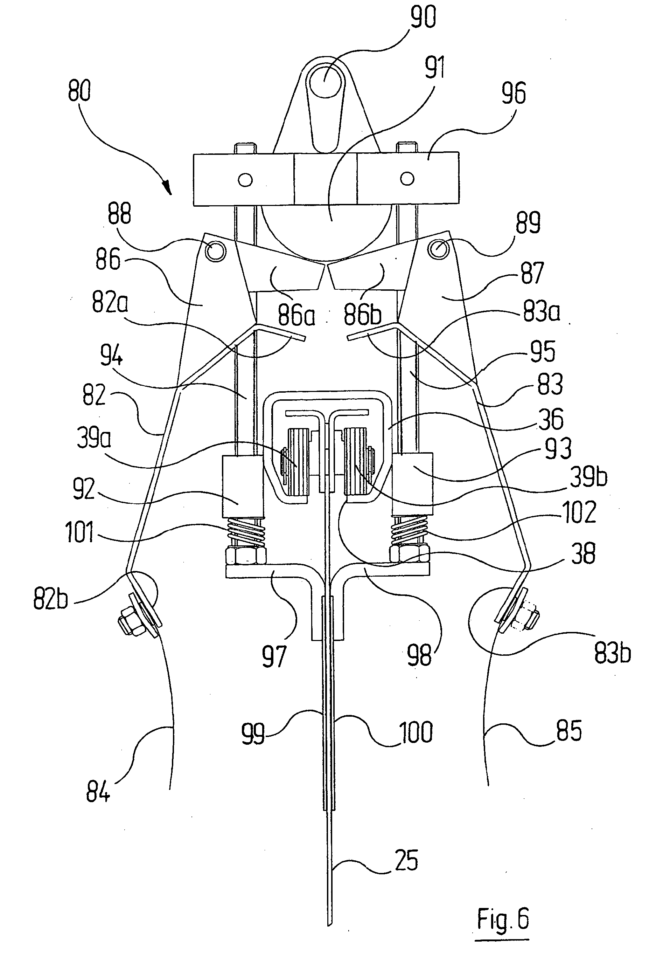

Eine weitere Achse 90, die ebenfalls in den beiden Stirnplatten 23, 24 gelagert ist, ist drehschlüssig und exzentrisch mit einer Kurvenscheibe 91 verbunden. Die Kurvenscheibe 91 kann durch Verdrehen der Achse 90 zwischen einer in Figur 4 dargestellten Position, in welcher sie im Wesentlichen nach oben weist und keinen Kontakt mit den Winkeln 86, 87 aufweist und einer in Figur 6 dargestellten Position, in welcher sie die Schenkel 86a, 86b der Winkel 86, 87 nach unten und die Profile 82, 83 auseinanderdrückt, verdreht werden. Der Sinn dieser Bauweise wird weiter unten deutlich werden.

Auf den Außenseiten der beiden vertikalen Schenkel der Schiene 36 sind zwei Führungsblöcke 92, 93 befestigt. Durch Führungsbohrungen in diesen Führungsblöcken 92, 93 verlaufen in vertikaler Richtung Betätigungsbolzen 94, 95. Die jeweils auf gegenüberliegenden Seiten der Mittelebene der Zuführeinrichtung 80 liegenden Betätigungsbolzen 94, 95 sind in ihren oberen Endbereichen durch eine Betätigungsplatte 96 miteinander verbunden. Die Betätigungsplatte 96 kann durch einen Betätigungsmechanismus nach unten gedrückt werden, wobei die Betätigungsbolzen 94, 95 nach unten bewegt werden.

Die unteren Enden der Betätigungsbolzen 94, 95 sind jeweils mit den horizontalen Schenkeln von Winkelprofilen 97, 98 verbunden, deren vertikale Schenkel jeweils ein Schieberblech 99, 100 tragen. Die Schieberbleche 99, 100 liegen mit ihren nach innen weisenden Flächen an gegenüberliegenden Seiten der Abscheideelektrode 25 an. Ihr unterer Rand kann sich gemeinsam mit der Betätigungsplatte 96 und den Betätigungsbolzen 94, 95 zwischen einer oberen Position, die in Figur 4 dargestellt ist, und eine unteren Position, die in Figur 5 gezeigt ist, bewegen. In der oberen Position der Figur 4 liegen die unteren Ränder der Schieberbleche 99, 100 oberhalb der unteren Ränder der Federbleche 84, 85, während in der unteren Position der Figur 5 die Schieberbleche 99, 100 die Federbleche 84, 85 etwas auseinanderbiegen und ihre unteren Ränder die Federbleche 84, 85 nach unten überragen.

Zwischen den Führungsblöcken 92, 93 und den horizontalen Schenkeln der Winkelprofile 97, 98 wirken jeweils Zugfedern 101, 102, welche die gesamte Anordnung aus Betätigungsplatte 96, Betätigungsbolzen 94, 95, Winkeln 97, 98 und Schieberblechen 99, 100 nach oben zu ziehen suchen.

Die oben beschriebene Lackieranlage 1 und insbesondere der deren Luftreinigung dienende Anlagenbereich 6 arbeiten wie folgt:
Der beim Lackieren der Fahrzeugkarosserie in der Lackierkabine 2 entstehende Overspray wird von dem Luftstrom, der die Lackierkabine 2 von oben nach unten durchströmt, aufgenommen und mitgeführt. Der Luftstrom durchtritt den Rost 4 und gelangt auf diese Weise in den Abscheideraum 9. Er trifft dort auf die Leitbleche 10, 11 bzw. auf die über diese gleichmäßig abströmende Abscheideflüssigkeit. Bereits an dieser Stelle wird von der Abscheideflüssigkeit ein großer Teil der Overspray-Partikel aufgenommen. Die Abscheideflüssigkeit strömt entlang der Leitbleche 11, 10 nach unten und sammelt sich in einem Sumpf 61 im unteren Bereich des Übergangsraumes 12.

Auch die Luft, die nach wie vor mit Overspray-Partikeln beladen ist, wird trichterartig in den Übergangsraum 12 geführt, dort zunächst um 90° umgeleitet und sodann aus dem Übergangsraum 12 durch eine erneute 90°-Umlenkung von unten her in die untere Einlassöffnung 15 des Gehäuses 19 der Abscheidevorrichtung 14 eingeführt. Der Abscheideraum 9 und der Übergangsraum 12 bilden so einen Luftweg zwischen der Auslassöffnung 3 der Lackierkabine 2 und der Einlassöffnung 15 der Abscheidevorrichtung 14.

Die Abscheidevorrichtung 14 wurde zuvor betriebsbereit. gemacht. Dies bedeutet zum einen, dass an die Gegenelektrodeneinrichtungen 26 die erforderliche Hochspannung angelegt wird. Zum anderen wurden die Zuführrinnen 81 der verschiedenen Zuführeinrichtungen 80 so weit mit Abscheideflüssigkeit gefüllt, dass zumindest der zwischen den Federblechen 84, 85 liegende Raum auf gegenüberliegenden Seiten der Schieberbleche 99, 100 bzw. der Abscheideelektrode 25 gefüllt ist. Dabei wird Sorge dafür getragen, dass dieses Niveau der Abscheideflüssigkeit in den Rinnen 81 dauerhaft aufrecht erhalten bleibt.

Zwischen den unteren Rändern der Federbleche 84, 85 fließt eine zusammenhängend Schicht der Abscheideflüssigkeit nach unten und gelangt auf diese Weise auf die gegenüberliegenden Abscheideflächen der Abscheideelektroden 25. Die Abscheideflüssigkeit fließt als gleichmäßige Schicht weiter auf den Abscheideelektroden 25 nach unten und tropft dann von deren unteren Rändern in den Sumpf 61 des Übergangsraumes 12 ab.

Die Abscheideflüssigkeit wird kontinuierlich oder intermitierend aus dem Sumpf 61 abgezogen und durch ein geeignetes Verfahren, beispielsweise durch Filtration, von den Overspray-Partikeln befreit. Sie kann dann zur Wiederverwendung in die Lackieranlage 1 zurückgeleitet werden.

Die mit Overspray-Partikeln beladene Luft tritt, wie oben schon erwähnt, in das Gehäuse 19 der Abscheidevorrichtung 14 ein. Sie und insbesondere die von ihr mitgeführten Overspray-Partikel werden im Bereich der Koronadrähte 27 der verschiedenen Gegenelektrodeneinrichtungen 26 ionisiert und im Bereich der Feldelektroden 29 der Gegenelektrodeneinrichtungen 26 in Richtung in die auf Massepotential liegende zugeordnete Abscheideelektrode 25 gezogen. Die Overspray-Partikel werden dabei von der Abscheideflüssigkeit, die von oben über die Abscheidefläche strömt, aufgenommen.

Luft und Abscheideflüssigkeit fließen auf diese Weise im Gegenstrom. Dies hat zur Folge, dass im unteren Bereich der Abscheideelektroden 25, wo die Verschmutzung der Luft mit Overspray-Partikeln am größten ist, auch die am stärksten mit abgeschiedenen Overspray-Partikeln beladene Abscheideflüssigkeit strömt. Umso weiter die Luft sich nach oben bewegt, umso reiner wird sie. Entsprechend wird auch die über die Abscheideelektroden 25 fließende Abscheideflüssigkeit sauberer, so dass die Luft, welche die Abscheidevorrichtung 14 nach oben verlässt, ein Höchstmaß an Sauberkeit erreicht hat. Sie kann dann ohne Weiteres über den Luftkanal 17 und den Sammel-Abführkanal 18 der Rekonditionierung und von dort erneut der Lackierkabine 2 zugeführt werden.

Die Abscheideflüssigkeit kann mehr oder weniger viskos sein. Um das Ausströmen der Abscheideflüssigkeit aus den Zuführrinnen 81 an den unteren Rändern der Federbleche 84, 85 vorbei zu fördern, sind die Schieberbleche 99, 100 vorgesehen. Diese werden in entsprechenden Zeitabständen durch Drücken auf die Betätigungsplatte 96 aus der in Figur 4 dargestellten oberen in die in Figur 5 dargestellte untere Position verschoben. Bei jedem derartigen Hub wird ein bestimmtes Quantum der Abscheideflüssigkeit aktiv nach außen auf die weiter unten liegenden Bereiche der Abscheideflächen der Abscheideelektrode 25 gedrückt.

Ein Betätigungsmechanismus, mit dem dies geschehen kann, ist in Figur 2 schematisch dargestellt und insgesamt mit dem Bezugszeichen 103 versehen. Er umfasst einen auf der Außenseite des Gehäuses 19 angeordneten Getriebemotor 104, der über zwei Gestänge 105, 106 zwei Wellen 107, 108 um einen bestimmten Winkel hin und her verdrehen kann. Die Wellen 107, 108 verlaufen parallel zueinander im oberen Bereich des Gehäuses 19 senkrecht zu den Schienen 36 und den Zuführrinnen 81. Die Wellen 107, 108 tragen drehschlüssig für jede Abscheideeinheit 21, 22 ein Betätigungsglied 109, welches in hier nicht näher interessierender Weise mit einer Betätigungsplatte 96 einer Zuführeinrichtung 80 zusammenwirkt. Ersichtlich ist es mit der Betätigungseinrichtung 103 möglich, alle Schieberbleche 84, 85 in der Abscheidevorrichtung 14 zwischen ihren beiden Positionen hin- und herzubewegen.

Von Zeit zu Zeit kann es erforderlich werden, den Innenraum der Zuführrinnen 81 zu reinigen. Dann wird die Kurvenscheibe 91 aus der in Figur 4 dargestellten Position in die in Figur 6 dargestellte Position verdreht, was zur Folge hat, dass die Federbleche 84, 85 von den Abscheideflächen der Abscheideelektrode 25 abheben. In der Führungsrinne 81 enthaltene Flüssigkeit kann auf diese Weise leicht auslaufen; darüber hinaus ist der Innenraum der Führungsrinne 81 zur Reinigung zugänglich. Der Mechanismus, mit welchem die Achse 90 und damit die Kurvenscheiben 91 verdreht werden, ist zeichnerisch nicht dargestellt.

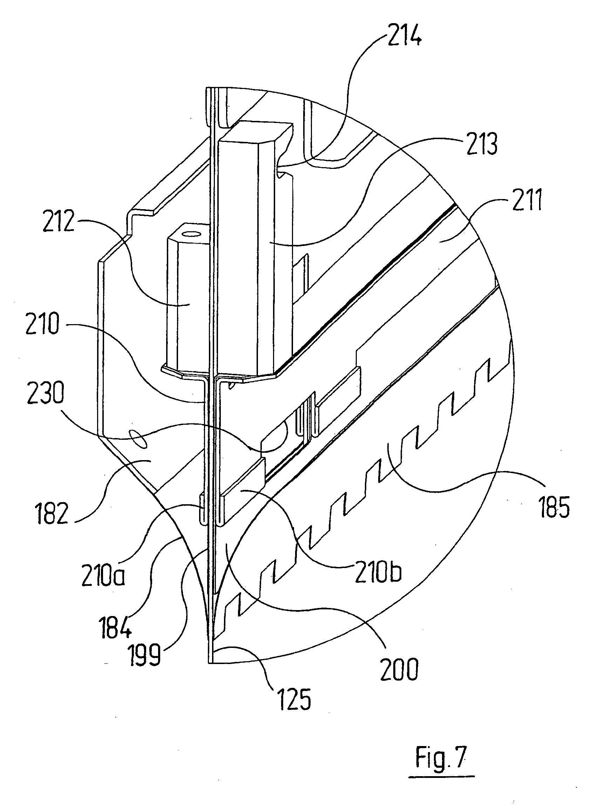

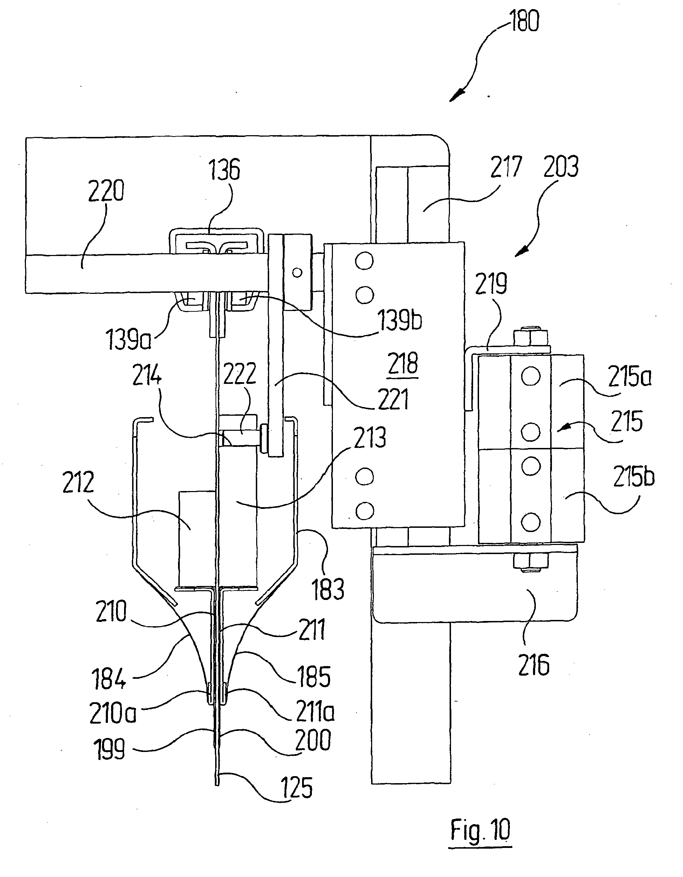

In den Figuren 7 bis 10 ist ein zweites Ausführungsbeispiel einer Zuführeinrichtung dargestellt, mit welcher den Abscheideflächen einer Abscheideelektrode Abscheideflüssigkeit zugeführt werden kann. Die Ausführungsform der Figuren 7 bis 10 ist konstruktiv einfacher als diejenige der Figuren 1 bis 6, leistet aber im Wesentlichen dasselbe. Komponenten der zweiten Ausführungsform, die solchen der ersten entsprechen, sind mit demselben Bezugszeichen zuzüglich 100 gekennzeichnet.

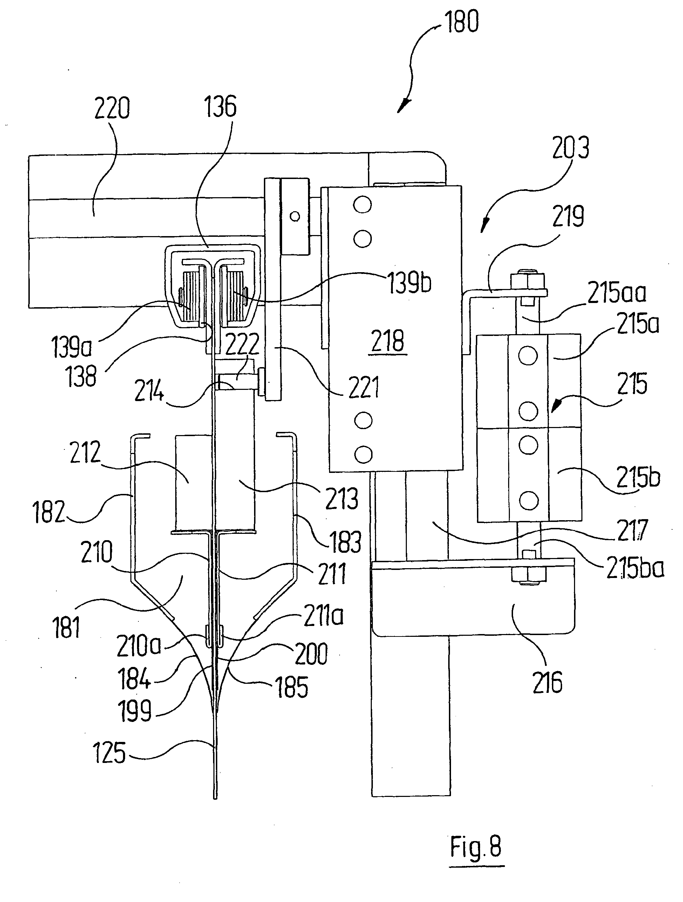

In den Figuren 8 bis 10 sind im Wesentliche identisch wiederzuerkennen das eine Schiene bildende Hohlprofil 136 mit dem Spalt 138 in der Unterseite. Wiederum erstreckt sich der obere Bereich einer Abscheideelektrode 125 durch den Spalt 138 nach oben ins Innere der Schiene 136. Dort sind Rollenpaare 139a, 139b an der Abscheideelektrode 125 gelagert und laufen auf den beiden unteren Flanschen der Schiene 136 ab. Erneut umfasst die Zuführeinrichtung 180 eine Zuführrinne 181, die in irgendeiner Weise mit einer Quelle einer Abscheideflüssigkeit verbunden ist. Die Zuführrinne 181 wird wiederum von zwei Profilblechen 182, 183 und von zwei an unteren Schenkeln der Profilbleche 182, 183 befestigten Federblechen 184, 185 begrenzt. Die Federbleche 184, 185 sind in diesem Falle nicht angeschraubt, sondern angeklebt.

Anders als beim Ausführungsbeispiel der Figuren 1 bis 6 sind die Profilbleche 182, 183 unbeweglich und sind an beiden gegenüberliegenden Enden jeweils mit einer Stirnwand der entsprechenden Abscheideeinheit verbunden.

Die unteren Ränder der Federbleche 184, 185 liegen im Normalzustand an den seitlichen Abscheideflächen der Abscheideelektrode 125 an.

Auch das Ausführungsbeispiel der Figuren 7 bis 10 weist zwei Schieberbleche 199, 200 auf, die auf gegenüberliegenden Seiten an der Abscheideelektrode 125 verschiebbar anliegen und zwischen unterschiedlichen Positionen verschoben werden können, die in den Figuren 8 bis 10 dargestellt sind.

Auf den Außenflächen der beiden Schieberbleche 199, 200 ist jeweils ein gewinkeltes Distanzblech 210 bzw. 211 angeordnet, das in seinem unteren Bereich rechteckige, nach unten ragende Vorsprünge 210a bzw. 211a aufweist, die in sich zurückgebogen sind, so dass hier im Ergebnis ein Randbereich mit einer Dicke entsteht, die etwa der doppelten Blechstärke entspricht. Die Vorsprünge 210a, 211a können unterschiedliche oder auch gleiche Abstände von einander aufweisen. Fluchtend mit den Abständen zwischen benachbarten Vorsprüngen 210a, 211a befinden sich in den Schieberblechen 199, 200 sowie in der in Figur 7 dargestellten Position auch in der Abscheideelektröde 125 Fenster 230, die einen Niveau-Ausgleich der auf beiden Seiten der Abscheideelektrode 125 befindlichen Abscheideflüssigkeit ermöglichen.

Die oberen, horizontal umgebogenen Schenkel der Distanzbleche 210, 211 sind gemeinsam mit oberen, horizontal umgebogenen Schenkeln der Schieberbleche 199, 200 an Klötzen 212, 213 befestigt, zwischen denen sich die Abscheideelektrode 125 gleitend hindurchbewegen kann. In dem in den Figuren 8 bis 10 rechten Klotz 213 ist eine Mitnahmeöffnung 214 ausgebildet, deren Sinn weiter unten deutlich wird.

Die Schieberbleche 199, 200 werden von einer Betätigungseinrichtung 203 auf- und abbewegt, die als Kraftquelle einen hydraulischen oder pneumatischen Kurzhub-Doppelzylinder 215 aufweist. Der Kurzhub-Doppelzylinder 215 ist aus zwei Kurzhubzylindern 215a, 215b zusammengesetzt, die gegensinnige zueinander angeordnet sind und mit ihren Gehäusen aneinander befestigt sind. Die Kolbenstange 215ba des unteren Kurzhubzylinders 215b ist an einem Teil 216 befestigt, das seinerseits fest mit dem Gehäuse der Abscheidevorrichtung verbunden ist.

Ebenfalls starr an dem Gehäuse angebracht ist eine vertikal verlaufende Führungsschiene 217, auf welcher ein verfahrbarer Schlitten 218 geführt ist. Der Schlitten 218 ist über ein Winkelblech 219 mit der Kolbenstange 215aa des oberen Kurzhubzylinders 215a bewegungsschlüssig verbunden.

Zwischen dem Schlitten 218 und einem auf der gegenüberliegenden Seite der Abscheidevorrichtung vorgesehenen, entsprechenden Schlitten, der in der Zeichnung nicht dargestellt ist, verläuft eine Stange 220, an der mehrere nach unten ragende Mitnehmerarme 221 befestigt sind. Für jede Abscheideeinheit ist ein derartiger Mitnehmerarm 221 vorgesehen. Er greift mit einem horizontal verlaufenden Mitnehmerstift 222 in die Mitnahmeöffnung 214 des Klotzes 213 der entsprechenden Abscheideeinheit ein. Ersichtlich können durch Betätigung des Kurzhub-Doppelzylinders 215 alle Schieberbleche 199, 200 gemeinsam mit allen Distanzblechen 210, 211 auf- und abbewegt werden, wie dies nachstehend noch näher erläutert wird.

Figur 8 zeigt die "normale" Arbeitssituation. In dieser liegen die unteren Ränder der Federbleche 184, 185 an den gegenübeliegenden Abscheideflächen der Abscheideelektrode 125 an. Innerhalb der Federbleche 184, 185 steht Abscheideflüssigkeit, die, wie beim ersten Ausführungsbeispiel, nach Bedarf nachgeliefert wird, um in der Zuführrinne 181 einen etwa konstanten Spiegel aufrecht zu erhalten. Die unteren Ränder der Schieberbleche 199, 200 befinden sich oberhalb der unteren Ränder der Federbleche 184, 185 und der untere Rand der Distanzbleche 210, 211 befindet sich in noch größerer Höhe.

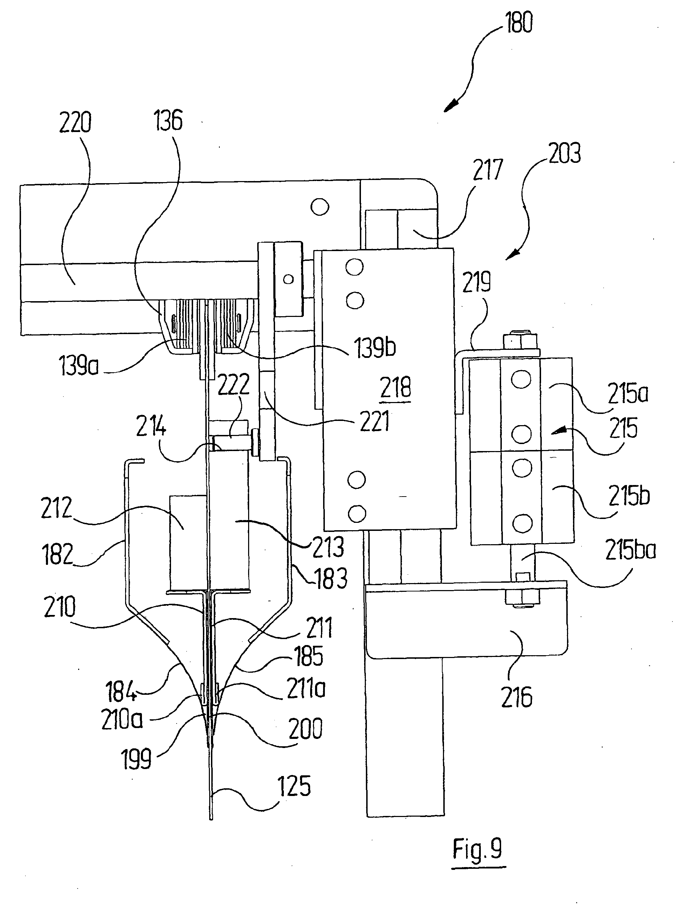

Um nun das Ausfließen der Abscheideflüssigkeit aus der Zuführrinne 181 bei Bedarf zu fördern, werden die Schieberbleche 199, 200 durch entsprechende Betätigung des oberen Kurzhubzylinders 215a so weit nach unten geschoben, dass die unteren Ränder sich unter die unteren Ränder der Federbleche 184, 185 schieben, wie dies in Figur 9 gezeigt ist. Bei dieser Hubbewegung wird wiederum ein gewisses Quantum der Abscheideflüssigkeit aktiv aus der Zuführrinne 181 nach unten auf die gegenüberliegenden Abscheideflächen der Abscheideelektrode 125 gebracht. Die unteren Ränder des Distanzbleche 210, 211 bleiben aber in einer solchen Höhe, dass sie keinen Einfluss auf die Position und Gestalt der Federbleche 184, 185 besitzen. Zwischen den beiden in Figur 8 und Figur 9 dargestellten Positionen wechseln die Schieberbleche 199, 200 und - im gleichen Takt hiermit - der Distanzbleche 210, 211 hin- und her.

Wird eine Reinigung der Zuführrinne 181 gewünscht, werden mit Hilfe des unteren Kurzhubzylinders 215b die Schieberbleche 199, 200 mit den Distanzblechen 210, 211 so weit nach unten geschoben, bis die unteren, in der Dicke vergrößerten Randbereiche der Distanzbleche 210, 211 die unteren Ränder der Federbleche 184, 185 auseinanderbiegen. Nun kann die in der Zuführrinne 181 befindliche Abscheideflüssigkeit durch die Zwischenräume zwischen den Vorsprüngen 210a, 211a leicht ablaufen.

In der in Figur 7 dargestellten Perspektive der Zuführeinrichtung 180 ist eine Besonderheit erkennbar, die auch beim Ausführungsbeispiel der Figuren 1 bis 6 verwirklicht sein könnte: Der untere Rand der Federbleche 184, 185 ist dort nämlich nicht geradlinig sondern zinnenartig ausgestaltet. Die Federbleche 184, 185 liegen somit nur mit den unteren Rändern der zinnenartigen, nach unten weisenden Vorsprünge an der Abscheideelektrode 125 an. Auch diese Maßnahme dient der Förderung des Flusses von Abscheideflüssigkeit aus der Führungsrinne 181 insbesondere dann, wenn die Abscheideflüssigkeit verhältnismäßig viskos ist.

## Patentansprüche

1. Anlage (1) zum Beschichten von Gegenständen mit
a) einer Beschichtungskabine (2), in welcher die Gegenstände mit Beschichtungsmaterial beaufschlagbar sind und durch die ein Luftstrom geführt werden kann, der Overspray-Partikel des Beschichtungsmaterials aufnimmt und abführt;
b) einer elektrostatisch arbeitenden Abscheidevorrichtung (14), deren Gehäuse (19) eine Einlassöffnung (15) für die mit Overspray-Partikeln beladene Luft und eine Auslassöffnung für die gereinigte Luft aufweist, wobei im Gehäuse (19) mindestens eine eine Abscheidefläche aufweisende Abscheideelektrode (25; 125) und eine Gegenelektrodeneinrichtung (26; 126) angeordnet sind;
c) einer Hochspannungsquelle, deren Pole mit der Abscheideelektrode (25; 125) und der Gegenelektrodeneinrichtung (26) verbindbar sind;
d) einem vom Boden der Beschichtungskabine (2) zur Einlassöffnung (15) der Abscheidevorrichtung (14) führenden Luftweg für die mit Overspray-Partikeln beladene Luft;
wobei
e) jeder Abscheideelektrode (25; 125) eine Zuführeinrichtung (80; 180) zugeordnet ist, mit deren Hilfe dem oberen Bereich jeder Abscheidefläche der Abscheideelektrode (25; 125) Abscheideflüssigkeit zuführbar ist, derart, dass die Abscheideflüssigkeit auf jeder Abscheidefläche der Abscheideelektrode (25; 125) flächig herabfließt;
**dadurch gekennzeichnet, dass**
f) die Zuführeinrichtung (80; 180) eine Zuführrinne (81; 181) aufweist, die bis zu einem gewissen Spiegel mit Abscheideflüssigkeit befüllbar ist und in ihrem unteren Bereich von zwei Federblechen (84, 85; 184, 185) gebildet ist, die zumindest zeitweise und zumindest bereichsweise mit ihren unteren Rändern an gegenüberliegenden Arbeitsflächen der Abscheideelektrode (25; 125) federnd anliegen;
g) zwei Schieberbleche (99, 100; 199, 200) vorgesehen sind, die an gegenüberliegenden Abscheideflächen der Abscheideelektrode (25; 125) verschiebbar anliegen;
h) eine Betätigungseinrichtung (103; 203) vorgesehen ist, mit welcher die Schieberbleche (99, 100; 199, 200) zwischen einer Position, in welcher ihre unteren Ränder oberhalb der unteren Ränder der Federbleche (84, 85; 184, 185) liegen, und einer Position hinund herbewegt werden können, in der ihre unteren Ränder unterhalb der unteren Ränder der Federbleche (84, 85; 184, 185) liegen.

2. Anlage (1) nach Anspruch 1, **dadurch gekennzeichnet, dass** die unteren Ränder der Federbleche (184, 185) zinnenartig oder nach Art eines groben Kammes geformt sind.

3. Anlage (1) nach Anspruch 1 oder 2, **dadurch gekennzeichnet, dass** eine Einrichtung (91, 94, 94; 210) vorgesehen ist, mit welcher die unteren Ränder der Federbleche (84, 85; 184,185) von der Anlage an den Abscheideflächen der Abscheideelektrode (25; 125) so weit weg bewegbar sind, dass der Inhalt der Zuführrinne (81; 181) auslaufen kann.

4. Anlage (1) nach einem der vorhergehenden Ansprüche, **dadurch gekennzeichnet, dass** sie zum Lackieren von Gegenständen ausgebildet ist.

5. Anlage (1) nach einem der vorhergehenden Ansprüche, **dadurch gekennzeichnet, dass** die Gegenstände Fahrzeugkarosserien sind.

## Claims

1. A system (1) for coating objects having:
a) a coating booth (2) in which the objects may be acted upon by coating material and through which an air stream can be guided which takes up overspray particles of the coating material and conveys them away;
b) an electrostatically operating separating device (14) whereof a housing (19) has an inlet opening (15) for the overspray-particle-laden air and an outlet opening for the cleaned air, wherein at least one separating electrode (25; 125), which has a separating surface, and a counter electrode device (26; 126) are arranged in the housing (19);
c) a high voltage source, whereof the poles can be connected to the separating electrode (25; 125) and the counter electrode device (26);
d) an air path for the overspray-particle-laden air, which leads from the base of the coating booth (2) to the inlet opening (15) of the separating device (14);
wherein
e) each separating electrode (25; 125) is associated with a supply device (80; 180) that enables separating fluid to be supplied to the upper region of each separating surface of the separating electrode (25; 125) in such a way that the separating fluid flows extensively over each separating surface of the separating electrode (25; 125);
**characterized in that**
f) the supply device (80; 180) has a supply channel (81; 181) which can be filled to a certain level with separating fluid and is formed in its lower region by two spring steel plates (84, 85; 184; 185) which resiliently lie at least sometimes and at least partially with their respective lower edges against opposite operating surfaces of the separating electrode (25; 125);
g) two sliding plates (99, 100; 199, 200) are provided, which lie displaceably against opposite separating surfaces of the separating electrode (25; 125);
h) an actuating device (103; 203) is provided, by means of which the sliding plates (99, 100; 199, 200) can be moved back and forth between a position in which their lower edges are located above the lower edges of the spring steel plates (84, 85; 184; 185) and a position in which their lower edges are located below the lower edges of the spring steel plates (84, 85; 184; 185).

2. A system (1) according to claim 1, **characterized in that** the lower edges of the spring steel plates (184; 185) have a crenellated shape or resemble a blunt comb.

3. A system (1) according to claim 1 or 2, **characterized in that** a device (91, 94, 94; 210) is provided, by means of which the lower edges of the spring steel plates (84, 85; 184; 185) can be moved away from the system at the separating surfaces of the separating electrode (25; 125) to an extent that the contents of the supply channel (81; 181) can run out.

4. A system (1) according to one of the preceding claims, **characterized in that** it is designed for painting objects.

5. A system (1) according to one of the preceding claims, **characterized in that** the objects are vehicle bodies.

## Revendications

1. Installation (1) de revêtement d'objets, comprenant
a) une cabine de revêtement (2), dans laquelle les objets peuvent être exposés à un matériau de revêtement et à travers laquelle peut être dirigé un courant d'air qui absorbe et évacue les particules d'excédent de pulvérisation du matériau de revêtement ;
b) un dispositif de séparation (14) à fonctionnement électrostatique, dont le boîtier (19) comporte une ouverture d'entrée (15) pour l'air chargé de particules d'excédent de pulvérisation et une ouverture de sortie pour l'air purifié, au moins une électrode de séparation (25 ; 125) comportant une surface de séparation et un dispositif de contre-électrode (26 ; 126) étant disposés dans le boîtier (19) ;
c) une source de haute tension dont les pôles peuvent être reliés à l'électrode de séparation (25 ; 125) et au dispositif de contre-électrode (26) ;
d) un passage d'air conduisant du plancher de la cabine de revêtement (2) à l'ouverture d'entrée (15) du dispositif de séparation (14) pour l'air chargé de particules d'excédent de pulvérisation ;
dans laquelle
e) à chaque électrode de séparation (25 ; 125) est associé un dispositif d'amenée (80 ; 180) à l'aide duquel du liquide de séparation peut être amené dans la zone supérieure de chaque surface de séparation de l'électrode de séparation (25 ; 125), de sorte que le liquide de séparation s'écoule en nappe sur chaque surface de séparation de l'électrode de séparation (25 ; 125) ;
**caractérisée en ce que**
f) le dispositif d'amenée (80; 180) comporte une rigole d'amenée (81 ; 181) qui peut être remplie de liquide de séparation jusqu'à un certain niveau et qui est formée dans sa zone inférieure par deux tôles à ressort (84, 85 ; 184, 185) qui s'appuient élastiquement, au moins temporairement et au moins par endroits, par leurs bords inférieurs sur des surfaces de travail opposées de l'électrode de séparation (25 ; 125) ;
g) deux tôles coulissantes (99, 100 ; 199, 200) sont prévues, qui s'appuient de manière coulissante sur des surfaces de séparation opposées de l'électrode de séparation (25 ; 125) ;
h) un dispositif d'actionnement (103 ; 203) est prévu, avec lequel les tôles coulissantes (99, 100 ; 199, 200) peuvent être déplacées selon un mouvement de va-et-vient entre une position dans laquelle leurs bords inférieurs se situent audessus des bords inférieurs des tôles à ressort (84, 85 ; 184, 185) et une position dans laquelle leurs bords inférieurs se situent au-dessous des bords inférieurs des tôles à ressort (84, 85 ; 184, 185).

2. Installation (1) selon la revendication 1, **caractérisée en ce que** les bords inférieurs des tôles à ressort (184, 185) sont formés en créneaux ou à la manière d'un peigne grossier.

3. Installation (1) selon la revendication 1 ou 2, **caractérisée en ce qu'**un dispositif (91, 94, 94 ; 210) est prévu, avec lequel les bords inférieurs des tôles à ressort (84, 85 ; 184, 185) peuvent être déplacés suffisamment loin de l'installation, au niveau des surfaces de séparation de l'électrode de séparation (25 ; 125), pour que le contenu de la rigole d'amenée (81 ; 181) puisse s'écouler.

4. Installation (1) selon l'une des revendications précédentes, **caractérisée en ce qu'**elle est conçue pour la peinture d'objets.

5. Installation (1) selon l'une des revendications précédentes, **caractérisée en ce que** les objets sont des carrosseries de véhicule.
